# EUROPÄISCHE PATENTSCHRIFT

(11) **EP 0 727 526 B1**
(45) Veröffentlichungstag und Bekanntmachung des Hinweises auf die Patenterteilung: **25.10.2000**
(21) Anmeldenummer: 96102240.7
(22) Anmeldetag: 15.02.1996
(51) Int. Cl.: E01H 1/00, E01H 5/00, E01H 5/09, A01B 59/06, B60R 9/06

(54) **Tragvorrichtung für Anbaugeräte von Arbeitskraftfahrzeugen**
Implement supporting device for utility motor vehicles
Dispositif de support d'accessoires pour véhicules automobiles utilitaires

(30) Priorität: 18.02.1995 DE 29502693 U
(43) Veröffentlichungstag der Anmeldung: 21.08.1996
(73) Patentinhaber: Giessler, Matthias, 77933 Lahr (DE)
(72) Erfinder: Giessler, Matthias, 77933 Lahr (DE)
(74) Vertreter: Neymeyer, Franz, Dipl.-Ing. (FH)

(56) Entgegenhaltungen:
- EP-A- 0 181 454
- EP-A- 0 201 437
- CH-A- 674 658

## Beschreibung

Die Erfindung betrifft eine Tragvorrichtung zum Befestigen von Anbaugeräten, insbesondere von Schneepflügen und/oder rotierend angetriebenen Kehrwalzen, an den Front- oder Heckseiten von Arbeitsfahrzeugen, bestehend aus einem vertikalen Gestellrahmen, an dem zwei untere und wenigstens ein oberer symmetrisch zu einer vertikalen Längsmittelebene angeordnete Parallellenker schwenkbar angelenkt sind, wobei die mittels eines hydraulischen Hebezylinders heb- und senkbaren Enden der Parallellenker jeweils gelenkig mit einem Tragrahmen verbunden sind, der das oder die Arbeitsaggregate, insbesondere einen Schneepflug und/oder eine Kehreinheit, trägt.

Es ist eine Tragvorrichtung der gattungsgemäßen Art bekannt (CH-A- 674 658), welche einen im wesentlichen vertikal verlaufenden Gestellrahmen aufweist, mit welchem die Tragvorrichtung an einem Arbeitsfahrzeug, beispielsweise einem Lastkraftwagen, befestigt ist. Zur Aufnahme eines Anbaugerätes, in diesem Falle einer Kehreinrichtung, ist ein Tragrahmen vorgesehen, welcher über zwei untere und zwei obere Parallellenker am Gestellrahmen heb- und senkbar angeordnet ist. Zum Heben und Senken des Tragrahmens zusammen mit der Kehreinrichtung ist ein hydraulischer Hebezylinder vorgesehen, welcher sich im unteren Bereich des Gestellrahmens gelenkig abstützt und mit einer Querverbindung der oberen Parallellenker gelenkig verbunden ist. Die Kehreinrichtung weist zum Antrieb ihrer Kehrwalze, welche quer zur Fahrtrichtung angeordnet ist, ein Antriebsgetriebe auf. Im Betrieb verläuft die Kehrwalze im wesentlichen horizontal, wobei deren Arbeitshöhe mittels zweier höhenverstellbarer Stützräder einstellbar ist. Die Parallellenker sind sowohl am Gestellrahmen wie auch am Tragrahmen über Schwenklager gelenkig angelenkt, wobei die vier Schwenklager ein gewisses Lagerspiel aufweisen. Durch dieses Lagerspiel ist der Tragrahmen gegenüber dem starr am Arbeitsfahrzeug befestigten Gestellrahmen bei auftretenden Unebenheiten der zu reinigenden Fahrbahn um eine Längsachse der Tragvorrichtung verschwenkbar. Diese Schwenkbarkeit wird allerdings durch die starre und nur geringfügig nachgiebige Querverbindung zwischen den oberen Parallellenkern eingeschränkt, so daß eine ausreichende Ausgleichs- bzw. Schwenkbewegung des Tragrahmens gegenüber dem Gestellrahmen bei größeren Fahrbahnunebenheiten nicht möglich ist. Auch bei Arbeitsfahrzeugen mit großem Federweg ist die bekannte Tragvorrichtung nicht einsetzbar, da bei starkem einseitigem Einfedern des Arbeitsfahrzeuges die Kehrwalze einseitig von der Fahrbahn abgehoben wird und somit eine unzureichende Kehrwirkung auftritt.

Desweiteren weist die Kehreinrichtung durch das einseitig angeordnete Antriebsgetriebe getriebeseitig ein höheres Gewicht auf als auf der dem Getriebe gegenüberliegenden Seite. Beim Anheben des Tragrahmens zusammen mit der Kehreinrichtung kippt die Kehreinrichtung zusammen mit dem Tragrahmen aufgrund des vorhandenen Lagerspiels der Schwenklager und der eingeschränkten Nachgiebigkeit der Querverbindung einseitig aus ihrer horizontalen Arbeitslage in eine geneigt zur Horizontallage verlaufende Schräglage, so daß das seitlich äußere Ende der Kehreinrichtung mit dem Antriebsgetriebe tiefer liegt als das dem Antriebsgetriebe gegenüberliegende äußere Ende der Kehreinrichtung. Durch dieses seitliche Abkippen der Kehreinrichtung ist es notwendig, die Kehreinrichtung sehr weit anzuheben, damit sie vollständig vom Untergrund mit genügendem Abstand abgehoben ist.

Bei der bekannten Tragvorrichtung ist der Kehrwalze eine Querfördereinrichtung mit Fördergehäuse vorgeschaltet, wobei das Fördergehäuse in Arbeitslage knapp oberhalb der zu reinigenden Fahrbahn endet. Beim Absenken der Kehreinrichtung aus der angehobenen abgekippten Lage der Kehreinrichtung sitzt das Fördergehäuse der Querfördereinrichtung mit seiner einen, tiefer liegenden Außenkante auf dem Untergrund auf und wird beschädigt. Dies ist auch insbesondere deshalb der Fall, weil die vorhandenen Stützräder im größeren Abstand von der äußeren, seitlichen Begrenzungskante des Fördergehäuses einer solchen Fördereinrichtung angeordnet sind und bei schrägem Abkippen des Tragrahmens oberhalb der nach unten hängenden Unterkante des Fördergehäuses der Fördereinrichtung liegen, so daß diese Unterkante beim Absenken der Kehreinrichtung zuerst mit dem Untergrund in Berührung kommt und somit bei schnellem Absenken beschädigt wird.

Anstatt einer Kehreinrichtung kann am Tragrahmen, sofern dieser frontseitig an einem Arbeitsfahrzeug angeordnet ist, auch ein schwenkbarer Schneepflug angeordnet sein, dessen Schwerpunkt sich ebenfalls asymmetrisch zur vertikalen Längsmittelebene der Tragvorrichtung beim Verschwenken verschiebt. Auch ein solcher Schneepflug bewirkt in seiner verschwenkten Stellung beim Anheben aufgrund des vorhandenen Lagerspiels der Schwenklager ein einseitiges Abkippen des Tragrahmens mit dem Schneepflug nach unten, so daß dessen im Betrieb im wesentlichen horizontal parallel zur Fahrbahnoberfläche verlaufende Schürfkante im angehobenen Zustand gegenüber der Fahrbahnoberfläche einen geneigten Verlauf aufweist. Dies führt wiederum dazu, daß beim Absenken, insbesondere beim Absenken mit größerer Geschwindigkeit die Schürfkante des Schneepfluges zunächst mit der weiter unten liegenden Außenkante auf der Fahrbahn aufsetzt, wodurch einerseits die Fahrbahn selbst und andererseits der Schneepflug beschädigt werden können.

Die Größe der möglichen Schwenkbewegungen sind aber auch in diesen Fällen durch die steife und nur in geringem Maße nachgiebige Querverbindung zwischen den oberen Parallellenkern nicht ausreichend, um auch größere Fahrbahnunebenheiten durch eine entsprechende Ausgleichsbewegung des Tragrahmens mit dem angebauten Schneepflug ausgleichen zu können. Auch ist damit der Schneepflug für Fahrzeuge mit großen Federwegen nicht einsetzbar ist, da keine genügend große ausgleichende Schwenkbewegung des Schneepfluges um eine Längsachse der Tragvorrichtung bei starkem einseitigen Einfedern des Arbeitsfahrzeuges möglich ist.

EP-A-0 181 454 beschreibt zwar eine Tragvorrichtung für einen Schneepflug mit einer feststellbaren Ausgleichsvorrichtung für mögliche Schwenkbewegungen in Querrichtung. Doch selbst wenn man den dort gezeigten Schemel 4 mit der Schwenkwelle 14 als "Tragrahmen" bezeichnen würde, wäre die Ausgleichsvorrichtung, bestehend aus den Auschlagbolzen 8 des Schemels und bogenförmigen Aussparungen 9 im Sattel 3, nicht zwischen "Tragrahmen" und den oberen Parallellenkern vorgesehen.

Der Erfindung liegt demgemäß die Aufgabe zugrunde, eine Tragvorrichtung der gattungsgemäßen Art derart auszugestalten, daß im Betrieb größere relative Schwenkbewegungen um eine Längsachse der Tragvorrichtung zwischen dem fahrzeugseitigen Gestellrahmen der Tragvorrichtung und dessen aggregatseitigem Tragrahmen möglich sind und der Tragrahmen zumindest beim Anheben relativ zum Gestellrahmen etwa horizontal verlaufend stabilisierbar ist.

Die Aufgabe wird erfindungsgemäß durch die Merkmale des Anspruchs 1 gelöst.

Durch die erfindungsgemäße Ausgestaltung der Tragvorrichtung ist der Tragrahmen und somit auch die Arbeitsaggregate beim Anheben, nach dem Anheben und/oder während des Anhebens gegenüber dem Rahmengestell in einer horizontal verlaufenden Lage stabilisierbar, so daß ein seitliches Abkippen oder auch Schwingbewegungen bei Überlandfahrten bei angehobenem Tragrahmen sicher ausgeschlossen sind. Durch entsprechende Ansteuerung der Ausgleichsvorrichtung wird diese in vorteilhafter Weise während des Anhebens bzw. kurz vor dem Anheben der Anbaugeräte aktiviert, so daß der obere Endabschnitt des Tragrahmens quer zu dem oder den oberen Parallellenker(n) verstellt oder in einer Mittelstellung fixiert wird und somit der Tragrahmen mit seinen Anbaugeräten in horizontaler Richtung ausrichtbar ist. Im Betrieb der Anbaugeräte, wenn diese also auf die Fahrbahn abgesenkt sind, ist der motorische Antrieb deaktivierbar, so daß größere Schwenkbewegungen um eine horizontale Längsachse des Tragrahmens mit den Anbaugeräten gegenüber dem Arbeitsfahrzeug bzw. dem starr am Arbeitsfahrzeug befestigten Gestellrahmen möglich sind. Diese Schwenkbewegungen werden durch die Verschiebbarkeit des oberen Endbereiches des Tragrahmens in Querrichtung relativ zum oder zu den oberen Parallellenker(n) erreicht, so daß quer zur Fahrtrichtung verlaufende Fahrbahnunebenheiten oder starkes, einseitiges Einfedern des Arbeitsfahrzeuges durch entsprechende Schwenk- bzw. Ausgleichsbewegungen des Tragrahmens gegenüber dem Gestellrahmen ausgleichbar sind.

Durch die Ausgestaltungen gemäß den Ansprüchen 2 bis 4 wird ein einfacher Aufbau der Ausgleichsvorrichtung erreicht, wobei das gemeinsame Lagerauge der oberen Parallellenker in Querrichtung zur vertikalen Längsmittelebene der Tragvorrichtung feststehend ausgebildet ist, so daß der Tragrahmen mit seinem oberen Endabschnitt mittels des Verschiebezylinders relativ zum Lagerauge bzw. relativ zu den oberen Parallellenkern verschiebbar und feststellbar ist. Durch die gleichzeitige Beaufschlagung des Hebezylinders und des Verschiebezylinders mit Druck wird beim Anheben der Anbaugeräte eine automatische Aktivierung des Verschiebezylinders erreicht, so daß der Tragrahmen mit den Anbaugeräten während des gesamten Hebevorgangs in seiner horizontalen Lage ausgerichtet bleibt. Der Verschiebezylinder wirkt dabei entgegen der asymmetrischen Gewichtskraft der angebauten Aggregate und drückt das Lagerauge z.B. gegen einen Anschlag, so daß das Lagerauge durch die Kolbenstange des Verschiebezylinders im einen Endbereich des Lagerbolzens fixiert ist, aber um die durch den Lagerbolzen definierte Lagerachse zum Heben und Senken des Tragrahmens noch schwenkbar ist.

Durch die Ausgestaltungen gemäß den Ansprüchen 5 bis 7 ist der obere Endbereich des Tragrahmens in beliebigen Positionen relativ zum Gestellrahmen fixierbar. Insbesondere können die beiden Verschiebezylinder mit längenverstellbaren Kolbenstangen ausgestattet sein, so daß durch gleichzeitiges Verändern der Länge beider Kolbenstangen die Position, in welcher der Lagerbolzen gegenüber dem Lagerauge fixiert werden soll frei wählbar ist. Sind die Verschiebezylinder nicht mit Druck beaufschlagt, so sind deren Kolbenstangen frei beweglich und werden bei entsprechenden Schwenkbewegungen des Tragrahmens gegenüber dem Gestellrahmen im Betrieb einfach in den Verschiebezylinder zurückgedrückt und verbleiben bis zu ihrer erneuten Aktivierung dort. Eine solche Anpaßbarkeit der relativen Position des Tragrahmens gegenüber dem oder den oberen Parallellenker(n) ist insbesondere dann von Vorteil, wenn an die Tragvorrichtung häufig Aggregate mit unterschiedlicher Gewichtsverteilung bezüglich der vertikalen Längsmittelebene der Tragvorrichtung angebaut werden sollen.

Anstatt zweier Verschiebezylinder kann auch eine Stellgabel gemäß der Ansprüche 8 und 9 vorgesehen sein, welche durch einen hydraulischen Stellzylinder aktivierbar ist. Die Lage der Stellgabel am Tragrahmen ist dabei in Querrichtung einstellbar, so daß auch die gewünschten Positionen, in welchen der Lagerzapfen im Lagerauge fixiert werden soll frei wählbar und entsprechenden Gewichtsverhältnissen der am Tragrahmen angebauten Arbeitsaggregate anpaßbar ist. Bei deaktiviertem Stellzylinder gibt die Stellgabel das Lagerauge bzw. eine am Lagerauge befestigte Stützplatte frei, so daß im Betrieb größere Schwenkbewegungen zwischen dem Tragrahmen und dem Gestellrahmen möglich sind.

Die weiteren Ausgestaltungen gemäß der Ansprüche 10 bis 13 erlauben eine kostengünstige und gewichtsreduzierende Konstruktion der Tragvorrichtung, wobei durch den Hydraulikzylinder gemäß Anspruch 13 der Tragrahmen um eine quer zur vertikalen Längsmittelebene der Tragvorrichtung verlaufenden Achse, welche gleichzeitig die gemeinsame vordere Schwenkachse der unteren Parallellenker bildet, je nach Bedarf verschwenkbar ist.

Anhand der Zeichnung wird im folgenden ein Ausführungsbeispiel der Erfindung näher erläutert. Es zeigt:
- Fig. 1: eine Tragvorrichtung der erfindungsgemäßen Art mit angebauter Kehreinrichtung und angebautem Schneepflug in Draufsicht;
- Fig. 2: die Tragvorrichtung aus Fig. 1 in Seitenansicht;
- Fig. 3: eine Teilansicht III aus Fig. 2;
- Fig. 4: einen Schnitt IV-IV aus Fig. 3;
- Fig. 5: einen Teilschnitt V-V aus Fig. 1;
- Fig. 6: eine Ausgleichsvorrichtung in Form einer Stellgabel.

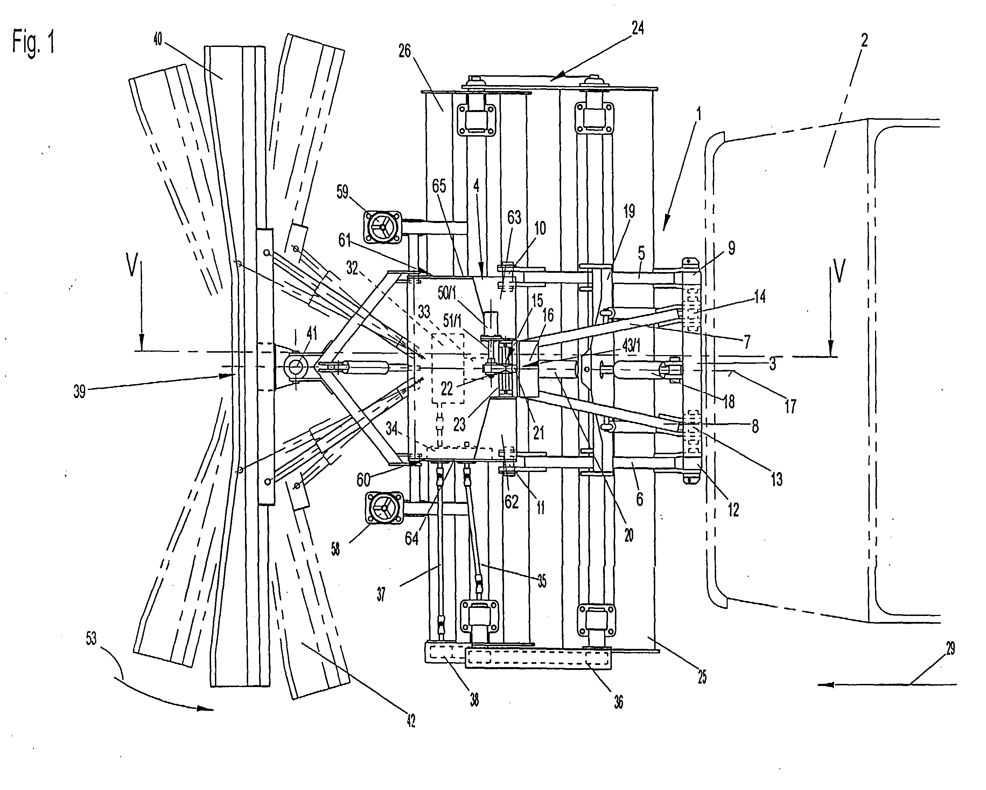

Fig. 1 zeigt eine Tragvorrichtung 1, welche an einem in Phantomlinie dargestellten Arbeitsfahrzeug 2 montiert ist. Die Tragvorrichtung weist einen im wesentlichen vertikal verlaufenden Gestellrahmen 3 auf, an welchem ein Tragrahmen 4 über zwei untere Parallellenker 5, 6 und zwei obere Parallellenker 7, 8 heb- und senkbar befestigt ist. Die Parallellenker 5 bis 8 sind jeweils am Gestellrahmen 3 und am Tragrahmen 4 über Schwenklager 9, 10, 11, 12 bzw. 13, 14, 15 in einer im wesentlichen vertikal verlaufenden Schwenkebene schwenkbar angelenkt.

Die beiden oberen Parallellenker 7, 8 verlaufen tragrahmenseitig nach vorne keilförmig aufeinander zu und sind mittels eines Quersteges 16, welcher quer zur vertikalen Längsmittelebene 17 der Tragvorrichtung 1 verläuft, miteinander verbunden.

Zum Anheben des Tragrahmens 4 ist ein hydraulischer Hebezylinder 18 vorgesehen, welcher mit seinem oberen Ende am Gestellrahmen 3 schwenkbar angelenkt ist. Mit seinem unteren Ende ist der hydraulische Hebezylinder 18 über eine Hubtraverse 19 mit den beiden unteren, parallel zueinander verlaufenden Parallellenkern 5 und 6 schwenkbar verbunden.

Zwischen den beiden oberen Parallellenkern 7, 8 ist ein in einer gemeinsamen Ebene mit den Parallellenkern 7, 8 verlaufender hydraulischer Schwenkzylinder 20 vorgesehen, welcher am Quersteg 16 befestigt ist und diesen tragrahmenseitig mit seiner Kolbenstange 21 durchragt. Über den Quersteg 16 und die Kolbenstange 21 sind die beiden oberen Parallellenker 7, 8 mit einem gemeinsamen Lagerauge 22 verbunden, welches einen am oberen Ende des Tragrahmens 4 befestigten Lagerbolzen 23 annähernd spielfrei umschließt. Der Schwenkzylinder 20 dient zum Verschwenken des Tragrahmens 4 aus seiner etwa vertikalen Ausgangslage. Der Lagerbolzen 23 und das Lagerauge 22 bilden dabei das gemeinsame vordere Schwenklager 15 der beiden oberen Parallellenker 7, 8. Der Lagerbolzen 23 verläuft quer zur vertikalen Längsmittelebene 17 der Tragvorrichtung 1 und erstreckt sich über eine Länge, welche ein Mehrfaches der Breite des Lagerauges 22 beträgt. Anstatt des Schwenkzylinders 20 kann auch ein starr mit dem Quersteg 16 verbundener Tragarm (in der Zeichnung nicht dargestellt) vorgesehen sein, welcher an seinem freien Ende das Lagerauge 22 trägt. In diesem Fall ist das Lagerauge 22 um die Längsachse des Tragarms im Tragarm drehbar gelagert, so daß sie den Schwenkbewegungen des Lagerbolzens 22 beim Schwenken bzw. Abkippen des Tragrahmens 4 folgen kann.

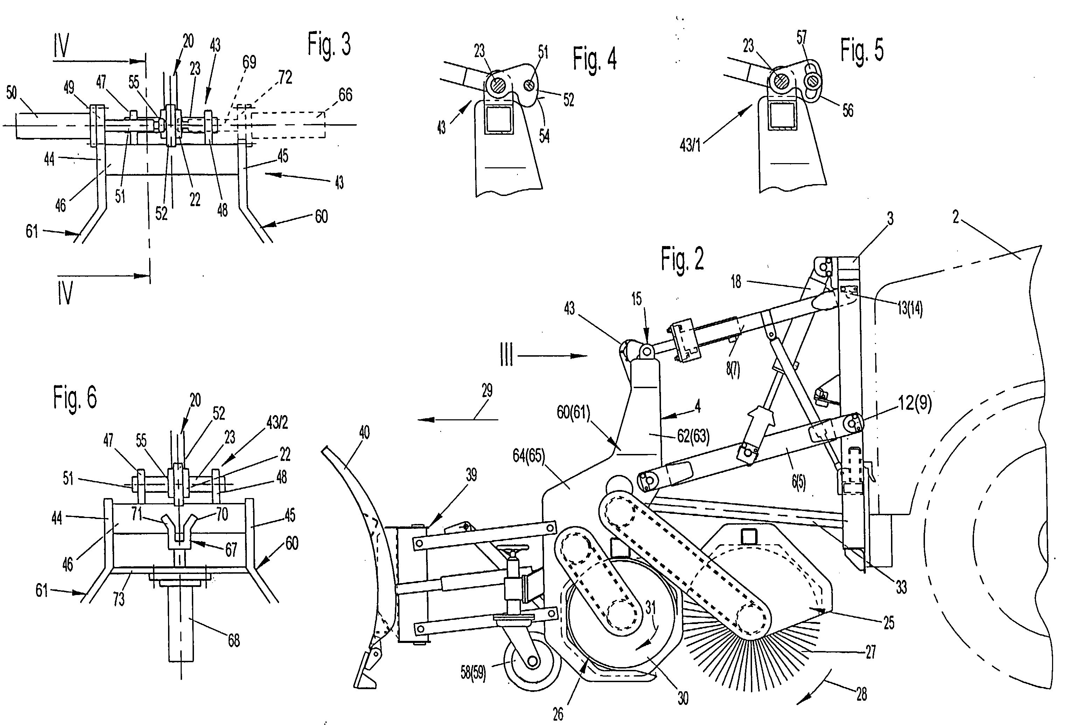

Der Tragrahmen 4 weist, wie aus den Figuren 1 und 2 ersichtlich ist, zwei vertikale Rahmenschenkel 60, 61 mit keilartig zueinander verlaufenden Mittelabschnitten 62, 63 auf, wobei die vertikalen Schenkelabschnitte 64, 65, an denen die unteren Parallellenker 5, 6 angelenkt sind, etwa den gleichen Abstand voneinander haben wie die unteren Parallellenker 5, 6 und wobei der Abstand der oberen, in Höhe des Lagerbolzens 23 liegenden vertikalen Schenkelabschnitte 44, 45 auf etwa ein Drittel des unteren Abstandes reduziert ist.

Unterhalb des Tragrahmens 4 ist an diesem eine Kehreinrichtung 24 montiert, welche aus einer Besenkehreinrichtung 25 und einer Förderschneckeneinrichtung 26 besteht. Die Besenkehreinrichtung 25 weist, wie aus Fig. 2 ersichtlich ist, eine Kehrwalze 27 auf, welche in Umfangsrichtung des Pfeiles 28 entgegen der Fahrtrichtung des Pfeiles 29 rotatorisch angetrieben ist. Die Förderschneckeneinrichtung 26 ist mit einer Förderschnecke 30 versehen, welche in Richtung des Pfeiles 31 rotatorisch angetrieben ist und dazu dient, von der Kehrwalze in die Förderschnecke geschleudertes Kehrgut seitlich nach außen zum Fahrbahnrand hin zu fördern.

Zum Antrieb der Kehrwalze 27 und der Förderschnecke 30 ist ein Winkelgetriebe 32 vorgesehen, welches beispielsweise über eine Kardanwelle 33 vom Arbeitsfahrzeug 2 angetrieben ist. Das Winkelgetriebe 32 treibt ein Verteilergetriebe 34 an, von welchem aus die Kehrwalze 27 über eine Doppelkreuzgelenkwelle 35 und ein entsprechendes Riemengetriebe 36 angetrieben ist. Vom Verteilergetriebe aus führt eine zweite Doppelkreuzgelenkwelle 37 zu einem zweiten Riemengetriebe 38, über welches die Förderschnecke 30 angetrieben ist.

Durch die gesamte Antriebseinheit, bestehend aus der Kardanwelle 33, dem Verteilergetriebe 34, den beiden Doppelkreuzgelenkwellen 35, 37 und den Riemengetrieben 36, 38 weist die Kehreinrichtung 25 in Fahrtrichtung des Pfeiles 29 auf der linken Seite ein wesentlich höheres Gewicht auf als auf der rechten Seite. Diese einseitige Gewichtsverteilung wird durch einen vor den Tragrahmen 4 an diesem separat heb- und senkbar befestigten Schneepflug 39 verstärkt, wenn dessen Pflugschar 40 nach links um deren vertikale Lagerachse 41 in die in Phantomlinien dargestellte Lage 42 verschwenkt wird, da sich der Schwerpunkt der Pflugschar bzw. des gesamten Schneepfluganbaus ebenfalls auf die in Fahrtrichtung gesehene linke Seite bezüglich der vertikalen Längsmittelebene 17 der Tragvorrichtung 1 verschiebt.

Damit im Betrieb der Tragrahmen 4 bei quer zur Fahrtrichtung verlaufenden Unebenheiten der Fahrbahn eine Schwenkbewegung um eine Längsachse der Tragvorrichtung ausführen kann, ist eine Ausgleichsvorrichtung 43 vorgesehen, welche aus dem Lagerbolzen 23, dem Lagerauge 22 und einem hydraulischen Verschiebezylinder 50 besteht. Im Betrieb führt der Tragrahmen 4 zum Ausgleich von Fahrbahnunebenheiten Schwenkbewegungen um eine Längsachse der Tragvorrichtung 1 gegenüber dem Gestellrahmen 3 bzw. dem Arbeitsfahrzeug 2 aus, wobei die Schwenkbewegungen durch die Ausgleichsvorrichtung 43 ermöglicht werden. Dabei verschiebt sich der Lagerbolzen 23 bei nicht mit Druck beaufschlagtem Verschiebezylinder 50 frei entlang des Lagerauges 22.

Um beim Anheben des Tragrahmens 4 durch die vorhandene unsymmetrische Gewichtsverteilung ein seitliches Abkippen um eine Längsachse der Tragvorrichtung 1 zu vermeiden, ist der Verschiebezylinder 50 vorgesehen.

In Fig. 3 ist ein Ausführungsbeispiel einer Ausgleichsvorrichtung 43 dargestellt. Die beiden oberen Schenkelabschnitte 44, 45 der Rahmenschenkel 60, 61 verlaufen parallel zueinander und sind durch eine Verbindungstraverse 46 miteinander verbunden. Die Verbindungstraverse 46 weist auf ihrer Oberseite zwei Lagerböcke 47, 48 auf, in welchen der Lagerbolzen 23 lösbar und in seiner Achsrichtung unverschiebbar befestigt ist. Im Lagerauge 22 des Schwenkzylinders 20 ist der Lagerbolzen 23 verschiebbar gelagert. Der Schenkelabschnitt 44 weist oberhalb der Verbindungstraverse 46 einen Montageabschnitt 49 auf, welcher zur Aufnahme des hydraulischen Verschiebezylinders 50 dient. Der Verschiebezylinder 50 ist außenseitig am Montageabschnitt 49 montiert und durchragt den Montageabschnitt 49 mit einer Kolbenstange 51, welche im vorliegenden Ausführungsbeispiel an einer Stützplatte 52 des Lagerauges 22 anliegt. Die Kolbenstange 51 befindet sich in der in Fig. 3 gezeigten Darstellung in einer Mittelstellung und ist im unbelasteten Zustand, d.h. wenn der Verschiebezylinder 50 nicht mit Druck beaufschlagt ist, bis annähernd zum Montageabschnitt 49 hin in den Verschiebezylinder 50 einschiebbar.

In dieser Stellung befindet sich der Tragrahmen 4 mit der Kehreinrichtung 25 und dem Schneepflug 40 in einer abgesenkten Arbeitsposition, wie dies Fig. 2 zeigt, so daß der Tragrahmen je nach Fahrbahnbeschaffenheit gegenüber dem Gestellrahmen 3 der Tragvorrichtung 1 in etwa in einer Vertikalebene liegende Schwenkbewegungen ausführen kann. In dieser abgesenkten Arbeitsposition stützt sich der Tragrahmen über zwei höhenverstellbare Stützräder 58, 59 auf der Fahrbahn ab. Bei diesen Schwenkbewegungen gleitet der Lagerbolzen 23 im Lagerauge 22 entsprechend der Kippbewegung des Tragrahmens 4 frei hin und her.

Beim Anheben des Tragrahmens 4 zusammen mit der Besenkehreinrichtung 25 und dem Schneepflug 40 wird der Verschiebezylinder 50 gleichzeitig mit dem Hebezylinder 18 der Tragvorrichtung 1 mit Druck beaufschlagt und verschiebt mit seiner Kolbenstange 51 das Lagerauge 22 über dessen Stützplatte 52 in Richtung des Lagerbockes 48, so daß das Abkippen des Tragrahmens 4 aus seiner Horizontallage aufgrund der Nachgiebigkeit der Schwenklager 11 bis 15 ungleichmäßig verteilten Gewichtsverhältnisse der Kehreinrichtung 25 und des verschwenkten Schneepfluges 40 in Richtung des Pfeiles 53 sicher verhindert wird. Somit wird durch das Verschieben und fixieren des Lagerbolzens 23 im Lagerauge 22 das Lagerspiel vollständig ausgeglichen und der Tragrahmen hängt in einer stabilen horizontalen Lage an den Parallellenkern 5, 6 bzw. 7, 8.

Fig. 4 zeigt einen Teilschnitt IV-IV aus Fig. 4, in welchem die Formgebung der Stützplatte 52 sichtbar ist. Die Stützplatte 52 weist eine konzentrisch zum Lagerbolzen 23 verlaufende Außenkante 54 auf und erstreckt sich über einen Schwenkwinkel, der zumindest dem maximalen Hubschwenkwinkel der oberen Parallellenker 7, 8 entspricht, welcher sich aus der Stellung in abgesenkter Arbeitslage und der Stellung bei maximal angehobenem Tragrahmen 4 ergibt. Während des Anhebens gleitet die Kolbenstange 51 mit einem Gleitkopf 55 entlang der Stützplatte 52 und hält somit während des gesamten Hubvorganges das Lagerauge 22 am Lagerbock 48. Zur Berücksichtigung unterschiedlicher Gewichtsverhältnisse der Anbaugeräte und damit unterschiedlicher Kippwinkel zwischen dem Tragrahmen 4 und dem Gestellrahmen 3 ist der Gleitkopf 55 der Kolbenstange 51 an der Kolbenstange längenverstellbar befestigt. Durch Einstellen unterschiedlicher Längen des Gleitkopfes 55 an der Kolbenstange 51 ist das obere Ende des Tragrahmens 4 gegenüber dem Lagerauge 22 in verschiedene, den jeweils vorliegenden Kippwinkel gerade ausgleichende Endstellungen bringbar, so daß die Ausgleichsvorrichtung 43 auch an einer bereits bestehenden Tragvorrichtung nachrüstbar ist.

Fig. 5 zeigt eine zweite Ausführungsform 43/1 der Ausgleichsvorrichtung 43 im Teilschnitt. Die Ausgleichsvorrichtung 43/1 ist mit einer Kupplungsplatte 56 versehen, welche einen konzentrisch zum Lagerbolzen 23 verlaufenden Kupplungsschlitz 57 aufweist. Wie aus Fig. 1 ersichtlich ist, durchragt die Kolbenstange 51/1 des Verschiebezylinders 50/1 bei diesem Ausführungsbeispiel den Kupplungsschlitz 57 der Kupplungsplatte 56 und ist mittels einer Schraubverbindung im Kupplungsschlitz 57 verschiebbar ständig mit der Kupplungsplatte 56 sowohl in Arbeitsstellung als auch während des Anhebens verbunden.

Mit der Ausgleichsvorrichtung 43/1 mit der in axialer Richtung festen Verbindung zwischen der Kolbenstange 51/1 und der Kupplungsplatte 56 ist ein doppelseitig wirkender Verschiebezylinder 50/1 einsetzbar, so daß bei einem angebauten verschwenkbaren Schneepflug ohne Kehreinrichtung eine Kippbewegung des Tragrahmens in die eine oder andere Richtung ausgleichbar ist. Bei der Ausgleichsvorrichtung 43/1 ist der Tragrahmen 4 mit seinem oberen Ende im Lagerauge 22 aus einer Mittelstellung heraus, in welcher der Tragrahmen horizontal verläuft über die Kolbenstange 51/1 sowohl in die eine als auch in die andere Querrichtung zum vertikalen Längssymmetrieebene 17 der Tragvorrichtung 1 verschiebbar. Auch in diesem Fall kann die Kolbenstange 51/1 längenverstellbar ausgeführt sein, so das verschiedene Kippwinkel des Tragrahmens 4 gegenüber dem Gestellrahmen 3 ausgleichbar sind.

Wie aus Fig. 3 ersichtlich ist, kann am oberen Ende des Tragrahmens 4 dem Verschiebezylinder 50 symmetrisch gegenüberliegend ein zweiter hydraulischer Verschiebezylinder 66 vorgesehen sein (gestrichelt dargestellt), welcher koaxial zum Verschiebezylinder 50 angeordnet ist. Zur Montage des Verschiebezylinders 66 weist der Schenkelabschnitt 45 des Rahmenschenkels 60 oberhalb der Verbindungstraverse 46 einen vertikalen Montageabschnitt 72 auf. Der Verschiebezylinder 66 ist außenseitig am Montageabschnitt 72 montiert und durchragt den Montageabschnitt 72 mit seiner Kolbenstange 69, welche an der Stützplatte 52 des Lagerauges 22 anliegt. Für diesen Fall, daß zwei Verschiebezylinder 50 und 66 vorgesehen sind, befinden sich die beiden Kolbenstangen 51 und 69 der Verschiebezylinder 50 und 66 in der gezeigten Darstellung der Fig. 3 in ihrer Endposition. D.h. daß beide Verschiebezylinder 50, 66 mit Druck beaufschlagt sind und die Stützplatte 52 zusammen mit dem Lagerauge 22 in der gezeigten Mittelstellung halten. Beide Kolbenstangen 50, 69 sind in ihrer Länge verstellbar ausgeführt, so daß die Stützplatte 52 und damit der Lagerzapfen 23 gegenüber dem Lagerauge 22 in unterschiedlichen Positionen relativ zueinander feststellbar ist. Die Aktivierung der Verschiebezylinder 50, 66 kann dabei gleichzeitig mit der Druckbeaufschlagung des Hebezylinders 18 erfolgen, so daß schon während des Anhebens des Tragrahmens 4 dieser in der gewünschten horizontalen Lage automatisch fixiert wird.

Fig. 6 zeigt ein weiteres Ausführungsbeispiel 43/2 einer Ausgleichsvorrichtung 43, welche zum fixieren des Lagerbolzens 23 gegenüber dem Lagerauge 22 mit einer Stellgabel 67 versehen ist, welche durch einen hydraulischen Stellzylinder 68 betätigbar ist. Zum Fixieren wird der Stellzylinder 68 mit Druck beaufschlagt und die Stellgabel 67 mit ihren beiden Gabelholmen 70, 71 über die Stützplatte 52 geschoben. Der Stellzylinder 68 ist ortsfest an einer Quertraverse 73, welche zwischen den unteren Enden der beiden Schenkelabschnitte 44, 45 in Querrichtung verlaufend angeordnet ist befestigt. Dabei ist vorgesehen, daß der Stellzylinder 68 in Querrichtung an unterschiedlichen Positionen an der Quertraverse 73 befestigbar ist. Damit ist auch mit der Ausgleichsvorrichtung 43/1 das Fixieren des Lagerbolzens 23 gegenüber dem Lagerauge 22 in vorwählbaren Relativstellung zueinander durchführbar.

Durch die Tragvorrichtung 1 mit ihrer Ausgleichsvorrichtung 43, 43/1 bzw. 43/2 wird eine Vorrichtung zur Verfügung gestellt, welche im Betrieb der an der Tragvorrichtung 1 angebauten Aggregate eine Schwenkbewegung der Aggregate gegenüber dem Arbeitsfahrzeug zuläßt, welche ausreichend groß ist, um auch größeren Unebenheiten einer Fahrbahn oder auch ein starkes einseitiges Einfedern des Arbeitsfahrzeuges 2 auszugleichen. Gleichzeitig ist aber mit der erfindungsgemäßen Tragvorrichtung 1 durch die vorgesehenen Verschiebezylinder 50, 66 bzw. die Stellgabel 67 der Tragrahmen 4 gegenüber dem Gestellrahmen stabilisierbar, so daß die Aggregate von der Fahrbahn in einer horizontalen Lage abhebbar sind. Durch die variable Einstellbarkeit der relativen Position zwischen dem Lagerbolzen 23 und dem Lagerauge 22 sind auch unterschiedliche Gewichtsverhältnisse der Aggregate einfach berücksichtigbar, so daß der Tragrahmen 4 stets in horizontaler Ausrichtung stabil anhebbar ist.

## Patentansprüche

1. Tragvorrichtung (1) zum Befestigen von Anbaugeräten, insbesondere von Schneepflügen (39) und/oder rotierend angetriebenen Kehrwalzen(25), an den Front- oder Heckseiten von Arbeitsfahrzeugen (2), bestehend aus einem im Einbauzustand vertikalen Gestellrahmen (3), an dem zwei untere und wenigstens ein oberer symmetrisch zu einer vertikalen Längsmittelebene angeordnete Parallellenker (5, 6 bzw. 7, 8) schwenkbar angelenkt sind, wobei die mittels eines hydraulischen Hebezylinders (18) heb- und senkbaren Enden der Parallellenker (5, 6, 7, 8) jeweils gelenkig mit einem Tragrahmen (4) verbunden sind, der das oder die Arbeitsaggregate (25, 39), insbesondere einen Schneepflug (39) und/oder eine Kehreinheit (24), trägt und wobei
zwischen dem Tragrahmen (4) und dem oder den oberen Parallellenker(n) (7, 8) im Bereich des oberen Endabschnittes des Tragrahmens (4), welcher gelenkig mit dem oder mit den oberen Parallellenker(n) (7, 8) verbunden ist, eine Ausgleichsvorrichtung (43) vorgesehen ist, durch welche der obere Endabschnitt des Tragrahmens (4) in Querrichtung relativ zum oder zu den oberen Parallellenker(n) (7, 8) verschiebbar und zumindest während des Anhebens in vorwählbaren Positionen relativ zum oder zu den oberen Parallellenker(n) (7, 8) feststellbar ist.

2. Tragvorrichtung nach Anspruch 1, dadurch gekennzeichnet, daß zwei obere Parallellenker (7, 8) vorgesehen sind, welche am Gestellrahmen (3) symmetrisch zur vertikalen Längsmittelebene (17) verlaufend schwenkbar angelenkt sind und durch ein gemeinsames Lagerauge (22) mit einem im oberen Bereich des Tragrahmens (4) starr an diesem befestigten, im wesentlichen horizontal und quer zu den Parallellenkern (7, 8) verlaufenden Lagerbolzen (23) gelenkig verbunden sind, der mittels eines zwischen dem Lagerauge (22) und dem Lagerbolzen (23) wirksamen hydraulischen Verschiebezylinders (50) relativ zum Lagerauge (22) in Richtung seiner Achse verstellbar ist, wobei der Verschiebezylinder (50) zusammen mit dem Lagerauge (22) und dem Lagerbolzen(23) die Ausgleichsvorrichtung (43) bildet.

3. Tragvorrichtung nach Anspruch 2, dadurch gekennzeichnet, daß der Verschiebezylinder (50) gemeinsam mit dem die Parallellenker (5, 6, 7, 8) vertikal verschwenkenden Hebezylinder (18) mit Druck beaufschlagbar ist und dessen Kolbenstange (51) mit dem Lagerauge (22) verbunden ist oder sich mit ihrem freien Ende am Lagerauge (22) oder einer am Lagerauge (22) befestigten Stützplatte (52) abstützt.

4. Tragvorrichtung nach Anspruch 2 oder 3, dadurch gekennzeichnet, daß der Verschiebezylinder (50) exzentrisch und achsparallel zu Lagerbolzen (23) am Tragrahmen (4) angeordnet ist und daß die Kolbenstange (51) des Verschiebezylinders (50) mit einer am Tragarm oder am Lagerauge (22) befestigten Kupplungsplatte (56) in Verbindung steht, die einen zum Lagerbolzen (23) konzentrisch verlaufenden Kupplungsschlitz (57) zur beweglichen Aufnahme der Kolbenstange (51) aufweist.

5. Tragvorrichtung nach Anspruch 1, dadurch gekennzeichnet, daß zwei obere Parallellenker (7, 8) vorgesehen sind, welche am Gestellrahmen (3) symmetrisch zur vertikalen Längsmittelebene (17) verlaufend schwenkbar angelenkt sind und durch ein gemeinsames Lagerauge (22) mit einem im oberen Bereich des Tragrahmens (4) starr an diesem befestigten, im wesentlichen horizontal und quer zu den Parallellenkern (7, 8) verlaufenden Lagerbolzen (23) gelenkig verbunden sind, der mittels zweier zwischen dem Lagerauge (22) und dem Lagerbolzen (23) wirksamen hydraulischen Verschiebezylindern (50/1, 66) relativ zum Lagerauge (22) in einer vorbestimmten Position fixierbar ist, wobei die Verschiebezylinder (50/1, 66) zusammen mit dem Lagerauge (22) und dem Lagerbolzen(23) die Ausgleichsvorrichtung (43) bildet.

6. Tragvorrichtung nach Anspruch 5, dadurch gekennzeichnet, daß die Verschiebezylinder (50/1, 66) gemeinsam mit dem die Parallellenker (5, 6, 7, 8) vertikal verschwenkenden Hebezylinder (18) mit Druck beaufschlagbar ist und deren Kolbenstangen (51/1, 69) sich mit ihren freien Enden jeweils am Lagerauge (22) oder einer am Lagerauge (22) befestigten Stützplatte (52) abstützten.

7. Tragvorrichtung nach Anspruch 5 oder 6, dadurch gekennzeichnet, daß die Verschiebezylinder (50/1, 66) exzentrisch und achsparallel zum Lagerbolzen (23) am Tragrahmen (4) angeordnet sind.

8. Tragvorrichtung nach Anspruch 1, dadurch gekennzeichnet, daß zwei obere Parallellenker (7, 8) vorgesehen sind, welche am Gestellrahmen (3) symmetrisch zur vertikalen Längsmittelebene (17) verlaufend schwenkbar angelenkt sind und durch ein gemeinsames Lagerauge (22) mit einem im oberen Bereich des Tragrahmens (4) starr an diesem befestigten, im wesentlichen horizontal und quer zu den Parallellenkern (7, 8) verlaufenden Lagerbolzen (23) gelenkig verbunden sind, der mittels einer durch einen hydraulischen Stellzylinder (68) betätigbaren Stellgabel (67) in einer vorbestimmten Position relativ zum Lagerauge (22) fixierbar ist, wobei die Stellgabel (67) zusammen mit dem Stellzylinder (68), dem Lagerauge (22) und dem Lagerbolzen(23) die Ausgleichsvorrichtung (43) bildet.

9. Tragvorrichtung nach Anspruch 8, dadurch gekennzeichnet, daß der Stellzylinder (68) gemeinsam mit dem die Parallellenker (5, 6, 7, 8) vertikal verschwenkenden Hebezylinder (18) mit Druck beaufschlagbar ist und die Gabelholme (70, 71) der Stellgabel (67) in Sperrstellung der Stellgabel (67) das Lagerauge (22) oder eine am Lagerauge befestigte Stützplatte (52/1) in Querrichtung zur vertikalen Längsmittelebene (17) der Tragvorrichtung (1) in sperrend halten.

10. Tragvorrichtung nach einem der Ansprüche 1 bis 9, dadurch gekennzeichnet, daß die beiden oberen Parallellenker (7, 8) gemeinsam mit einem zumindest annähernd in der vertikalen Längsmittelebene (17) der Tragvorrichtung (1) angeordneten Tragarm verbunden sind, der an seinem gestellfernen Endabschnitt das Lagerauge (22) trägt, welches den Lagerbolzen (23) umschließt.

11. Tragvorrichtung nach einem der Ansprüche 1 bis 10, dadurch gekennzeichnet, daß der Lagerbolzen (23) in zwei Lagerböcken (47, 48) lösbar befestigt ist, die an einer die oberen Enden der beiden vertikalen Rahmenschenkel (60, 61) des Tragrahmens (4) miteinander verbindenden Verbindungstraverse (46) angeordnet sind.

12. Tragvorrichtung nach einem der Ansprüche 1 bis 11, dadurch gekennzeichnet, daß die beiden vertikalen Rahmenschenkel (60, 61) keilartig zueinander verlaufende Mittelabschnitte (62, 63) aufweisen, wobei die vertikalen Schenkelabschnitte (64, 65) der Rahmenschenkel (60, 61), an denen die unteren Parallellenker (5, 6) angelenkt sind, etwa den gleichen Abstand voneinander haben wie die unteren Parallellenker (5, 6) und wobei der Abstand der oberen, in Höhe des Lagerbolzens (23) liegenden vertikalen Schenkelabschnitte (44, 45) auf etwa ein Drittel des unteren Abstandes reduziert ist.

13. Tragvorrichtung nach einem der Ansprüche 1 bis 12, dadurch gekennzeichnet, daß an einem die beiden oberen Parallellenker (7, 8) starr miteinander verbindenden Quersteg (16) ein separat mit Druck beaufschlagbarer hydraulischer Schwenkzylinder (20) befestigt ist, dessen Kolbenstange (21) den gelenkig mit dem Lagerauge (22) verbundenen Tragarm bildet und der zum Verschwenken des Tragrahmens (4) aus einer etwa vertikalen Ausgangslage dient.

## Claims

1. An implement-supporting device (1) for the attachment of inter-changeable implements, especially snow ploughs (39) and/or powered rotating roller sweepers (25), onto the front or rear of traction vehicles (2) and comprising a vertically, built-in supporting frame (3) onto which two lower and at least one upper parallel, swivel-mounted guides (5,6 or 7,8) are adjustably directed, symmetrically to the vertically aligned, longitudinal axis, whereby the rising and falling ends of the parallel guides (5,6,7,8) are each adjustably attached to a carriage frame (4) that supports the one or other implement attachment or attachments (25,39), especially a snow plough (39) and/or a sweeping unit (24), and whereby an adjustment device (43) is provided between the carriage frame (4) that is adjustably attached to the upper parallel guide or guides (7,8), whereby the upper end-section of the carriage frame (4) can be firmly adjusted in a transverse direction and at least while being raised into a pre-selected position relative to the upper parallel guide or guides (7,8).

2. An implement-supporting device according to Claim 1, in which two upper parallel guides (7,8) that are progressively and adjustably directed symmetrically to the vertical, longitudinal axis (17) of the supporting frame (3), and by means of a communal bearing bush (22) are directionally attached to a bearing rod (23) that is rigidly attached and substantially running horizontal and oblique to the parallel guides (7,8) in the upper section of the carriage frame (4), that by means of an effective hydraulic shift-cylinder (50) situated between the bearing bush (22) and the bearing rod (23) is adjustable in the direction of its axis relative to the bearing bush (22), whereby the shift-cylinder (50) together with the bearing bush (22) and the bearing rod (23) together constitute the balancing mechanism (43).

3. An implement-supporting device according to Claim 2, in which the shift cylinder (50) together with the lifting cylinder (18) that vertically tilts the parallel guides (5,6,7,8), can be raised with pressure and whose piston rod (51) is attached to the bearing bush (22) or is braced against a supporting plate (52) that is attached to the bearing bush (22).

4. An implement-supporting device according to Claim 2 or 3, in which the shift cylinder (50) is situated eccentrically and parallel to the axis of the bearing rod (23) on the carriage frame (4), and in which the piston rod (51) of the shift cylinder (50) connects with a coupling plate (56) that is attached to the carriage arm or to the bearing bush (22) and contains a coupling slit (57) that runs concentrically to the bearing rod (23) for the adjustable retention of the piston rod (51).

5. An implement-supporting device according to Claim 1, in which two upper parallel guides (7,8) are provided, that are progressively directed symmetrically to the vertical-longitudinal axis (17) on the supporting frame (3), and by means of a communal bearing bush (22) are adjustably attached to a bearing rod (23) in the upper section of the carriage frame (4) to which it is firmly attached and that passes substantially horizontally and obliquely to the parallel guides (7,8), which by means of two, effective hydraulic shift-cylinders (50/1, 66) situated between the bearing bush (22) and the Bearing rod (23), can be fixed in a pre-determined position relative to the bearing bush (22), whereby the shift-cylinders (50/1,66) together with the bearing bush (22) and the bearing rod (23) constitute the balancing mechanism (43).

6. An implement-supporting device according to Claim 5, in which the shift-cylinders (50/1, 66) together with the lift-cylinder (18) that vertically tilts the parallel guides (5,6,7,8), may be raised with pressure and whose piston rods (51/1, 69) are contained at their respective free ends by the bearing bush (22) or by a supporting plate (52) attached to the bearing bush (22).

7. An implement-supporting device according to Claim 5 or 6, in which the shift-cylinders (50/1,66) are situated eccentrically and parallel to the axis of the bearing rod (23) on the carriage frame (4).

8. An implement-supporting device according to Claim 1, in which two upper parallel guides (7,8) are provided, that are progressively directed symmetrically to the vertical-longitudinal axis (17) of the supporting frame (3) and are adjustably fixed to the bearing rod (23) in the upper section of the carriage frame (4) to which it is firmly attached and lies substantially horizontal and oblique to the parallel guides by means of a common bearing bush (22) to which it is adjustably attached., and which is fixable in a pre-determined position relative to the bearing bush (22) by means of a hydraulic adjusting cylinder (68) that is activated by means of an adjusting fork (67), whereby the adjusting fork (67) together with the adjusting cylinder (68), the bearing bush (22) and the Bearing rod (23) constitute the balancing mechanism (43).

9. An implement-supporting device according to Claim 8, in which the adjusting cylinder (68) together with the vertically tilting lift-cylinder (18) that together with the parallel guides (5,6,7,8) can be raised with pressure and the fork-arms (70,71) of the adjusting fork (67) firmly hold the adjusting fork (67) the bearing bush (22) or a supporting plate (52/1) onto which the bearing bush is attached obliquely to the vertical longitudinal axis of the implement-supporting device (1) in the closed position.

10. An implement-supporting device according to any of the Claims 1 to 9, in which the two upper parallel guides (7,8) are together attached to a carriage arm that is positioned at least in an approximately vertical longitudinal plane (17) of the implement-supporting device, that carries the bearing bush (22) on its furthest end-section, which encloses the bearing rod (23).

11. An implement-supporting device according to any of the Claims 1 to 10, in which the bearing rod (23) is adjustably fixed in two bearing frames (47,48) that are situated at one of the upper ends of the two vertical frame arms (60,61) of the carriage frame (4), that are joined together by a cross-beam (46).

12. An implement-supporting device according to any of the Claims 1 to 11, in which the two vertical frame arms (60,61) include middle sections that proceed wedge-shaped to each other, whereby the vertical arm sections (64,65) of the frame arms (60,61), on which the lower parallel guides (5,6) are positioned, have approximately the same distance from one another as do the lower parallel guides (5,6), and whereby the distance of the upper vertical arm sections (44,45) situated at the level of the bearing rod (23), is reduced to about a third of the distance between the lower sections.

13. An implement-supporting device according to any of the Claims 1 to 12, in which a hydraulic tilting cylinder (20) that can be separately operated with pressure, is attached to a cross strut (16) that rigidly joins together the two upper parallel guides (7,8), and whose piston rod (21) constitutes the carriage arm that is flexibly attached to the bearing bush (22) and which serves to tilt the carriage frame (4) from its approximately vertical starting position.

## Revendications

1. Dispositif de support (1) pour fixer des accessoires, notamment des chasse-neige (39) et/ou des rouleaux de balayage (25) entraînés en rotation, sur le côté avant et/ou arrière de véhicules utilitaires (2), constitué d'un cadre de bâti (3) vertical à l'état installé, sur lequel sont articulés à pivotement des bras oscillants parallèles, deux bras inférieurs et au moins un bras supérieur (respectivement 5, 6 et 7, 8), disposés symétriquement à un plan médian longitudinal vertical, les extrémités des bras oscillants parallèles (5, 6, 7, 8), qui peuvent être relevées et abaissées au moyen d'un vérin hydraulique de levage (18), étant respectivement reliées en articulation à un cadre de support (4), qui porte le ou les accessoires de travail (25, 39), notamment un chasse-neige (39) et/ou une unité de balayage (24), et un dispositif compensateur (43) étant prévu entre le cadre de support (4) et le ou les bras oscillants parallèles supérieurs (7, 8) dans la région de la partie terminale supérieure du cadre de support (4), laquelle est reliée à ce ou ces bras oscillants parallèles supérieurs (7, 8), le dispositif compensateur (43) permettant de déplacer la partie terminale supérieure du cadre de support (4) en direction transversale par rapport à ce ou ces bras oscillants parallèles supérieurs (7, 8), et de la bloquer, au moins pendant le relevage, dans des positions présélectionnables par rapport à ce ou ces bras oscillants parallèles supérieurs (7, 8).

2. Dispositif de support selon la revendication 1, caractérisé en ce qu'il est prévu deux bras oscillants parallèles supérieurs (7, 8), qui sont articulés à pivotement sur le cadre de bâti (3) en s'étendant symétriquement au plan médian longitudinal vertical (17) et qui sont reliés en articulation, par un bossage de palier commun (22), à un axe de palier (23), rigidement fixé sur le cadre de support (4) dans la région supérieure de ce dernier et s'étendant essentiellement horizontalement et transversalement aux bras oscillants parallèles (7, 8), l'axe de palier (23) pouvant être déplacé par rapport au bossage de palier (22), dans la direction de son axe, au moyen d'un vérin hydraulique de translation (50) actif entre le bossage de palier (22) et l'axe de palier (23), le vérin de translation (50) formant conjointement avec le bossage de palier (22) et l'axe de palier (23) le dispositif compensateur (43).

3. Dispositif de support selon la revendication 2, caractérisé en ce que le vérin de translation (50) peut être sollicité en pression conjointement avec le vérin de levage (18) faisant pivoter verticalement les bras oscillants parallèles (5, 6, 7, 8), et sa tige de piston (51) est reliée au bossage de palier (22) ou s'appuie par son extrémité libre contre le bossage de palier (22) ou contre une plaque de soutien (52) fixée sur le bossage de palier (22).

4. Dispositif de support selon la revendication 2 ou 3. caractérisé en ce que le vérin de translation (50) est disposé sur le cadre de support (4) excentriquement et en parallélisme axial par rapport à l'axe de palier (23), et en ce que la tige de piston (51) du vérin de translation (50) est reliée à une plaque d'accouplement (56) fixée sur le bras de support ou sur le bossage de palier (22), plaque qui présente une fente d'accouplement (57), s'étendant concentriquement à l'axe de palier (23) et destinée à recevoir à déplacement la tige de piston (51).

5. Dispositif de support selon la revendication 1, caractérisé en ce qu'il est prévu deux bras oscillants parallèles supérieurs (7, 8), qui sont articulés à pivotement sur le cadre de bâti (3) en s'étendant symétriquement au plan médian longitudinal vertical (17) et qui sont reliés en articulation, par un bossage de palier commun (22), à un axe de palier (23), rigidement fixé sur le cadre de support (4) dans la région supérieure de ce dernier et s'étendant essentiellement horizontalement et transversalement aux bras oscillants parallèles (7, 8), l'axe de palier (23) pouvant, au moyen de deux vérins hydrauliques de translation (50/1, 66) actifs entre le bossage de palier (22) et l'axe de palier (23), être fixé dans une position prédéterminée par rapport au bossage de palier (22), les vérins de translation (50/1, 66) formant conjointement avec le bossage de palier (22) et l'axe de palier (23) le dispositif compensateur (43).

6. Dispositif de support selon la revendication 5, caractérisé en ce que les vérins de translation (50/1, 66) peuvent être sollicités en pression conjointement avec le vérin de levage (18) faisant pivoter verticalement les bras oscillants parallèles (5, 6, 7, 8), et leurs tiges de piston (51/1, 69) s'appuient par leurs extrémités libres respectivement contre le bossage de palier (22) ou contre une plaque de soutien (52) fixée sur le bossage de palier (22).

7. Dispositif de support selon la revendication 5 ou 6, caractérisé en ce que les vérins de translation (50/1, 66) sont disposés sur le cadre de support (4) excentriquement et en parallélisme axial par rapport à l'axe de palier (23).

8. Dispositif de support selon la revendication 1, caractérisé en ce qu'il est prévu deux bras oscillants parallèles supérieurs (7, 8), qui sont articulés à pivotement sur le cadre de bâti (3) en s'étendant symétriquement au plan médian longitudinal vertical (17) et qui sont reliés en articulation, par un bossage de palier commun (22), à un axe de palier (23), rigidement fixé sur le cadre de support (4) dans la région supérieure de ce dernier et s'étendant essentiellement horizontalement et transversalement aux bras oscillants parallèles (7, 8), l'axe de palier (23) pouvant, au moyen d'une fourche de réglage (67) pouvant être actionnée par un vérin hydraulique de réglage (68), être fixé dans une position prédéterminée par rapport au bossage de palier (22), la fourche de réglage (67) formant conjointement avec le vérin de réglage (68), le bossage de palier (22) et l'axe de palier (23) le dispositif compensateur (43).

9. Dispositif de support selon la revendication 8, caractérisé en ce que le vérin de réglage (68) peut être sollicité en pression conjointement avec le vérin de levage (18) faisant pivoter verticalement les bras oscillants parallèles (5, 6, 7, 8), et les montants de fourche (70, 71) de la fourche de réglage (67), dans la position de blocage de la fourche de réglage (67), maintenant bloqué le bossage de palier (22), ou une plaque de soutien (52/1) fixée sur le bossage de palier, en direction transversale au plan médian longitudinal vertical (17) du dispositif de support (1).

10. Dispositif de support selon une des revendications 1 à 9, caractérisé en ce que les deux bras oscillants parallèles supérieurs (7, 8) sont conjointement reliés à un bras de support disposé au moins approximativement dans le plan médian longitudinal vertical (17) du dispositif de support (1), bras qui porte sur sa partie terminale éloignée du cadre le bossage de palier (22) qui entoure l'axe de palier (23).

11. Dispositif de support selon une des revendications 1 à 10, caractérisé en ce que l'axe de palier (23) est fixé de façon amovible dans deux blocs de palier (47, 48), qui sont disposés sur une traverse de liaison (46) reliant entre elles les extrémités supérieures des deux branches de cadre verticales (60, 61) du cadre de support (4).

12. Dispositif de support selon une des revendications 1 à 11, caractérisé en ce que les deux branches de cadre verticales (60, 61) présentent deux parties médianes (62, 63) s'étendant l'une vers l'autre en forme de coin, les parties de branches verticales (64, 65) des branches de cadre (60, 61), sur lesquelles sont articulés les bras oscillants parallèles inférieurs (5, 6), se trouvant environ à la même distance entre elles que les bras oscillants parallèles inférieurs (5, 6), et la distance entre les parties de branches verticales supérieures (44, 45), situées à hauteur de l'axe de palier (23), étant réduite à environ un tiers de la distance inférieure.

13. Dispositif de support selon une des revendications 1 à 12, caractérisé en ce qu'un vérin hydraulique de pivotement (20), pouvant être sollicité séparément en pression, est fixé sur une branche transversale (16) reliant rigidement entre eux les deux bras oscillants parallèles supérieurs (7, 8), vérin dont la tige de piston (21) constitue le bras de support relié en articulation au bossage de palier (22), et qui sert à faire pivoter le cadre de support (4) à partir d'une position initiale approximativement verticale.
